# EUROPÄISCHE PATENTANMELDUNG

(11) **EP 1 880 982 A1**
(43) Veröffentlichungstag der Anmeldung: **23.01.2008**
(21) Anmeldenummer: 07013414.3
(22) Anmeldetag: 09.07.2007
(51) Int. Cl.: C02F 3/06, C02F 3/08, C02F 3/20

(54) **Filter für Teichanlagen**

(30) Priorität: 17.07.2006 DE 102006033288
(71) Anmelder: Sprick, Heinrich, 55543 Bad Kreuznach (DE)
(72) Erfinder: Sprick, Heinrich, 55543 Bad Kreuznach (DE)
(74) Vertreter: Winter, Brandl, Fürniss, Hübner Röss, Kaiser, Polte Partnerschaft Patent- und Rechtsanwaltskanzlei

(57) **Zusammenfassung**

Offenbart ist ein Filter für Teichanlagen o. ä. mit einem Schwimmbett aus Filterkörpern, die eine Besiedlungsfläche von Mikroorganismen zur Verfügung stellen. Erfindungsgemäß ist der Filter mit einem Förderrad ausgeführt, das von einem ins zu reinigende Wasser eingeleiteten Luftstrom (26) drehbar ist. Am Förderrad sitzt zumindest ein Förderblatt (12,14,16,18) welches so gestaltet ist, dass es Filterkörper (4) vom Schwimmbett weg nach unten und wieder zurück zum Schwimmbett bewegt. Bevorzugt hat das Förderrad (10) eine Vielzahl von Förderblättern, die jeweils einen Sammelraum (28) für Luftblasen und Filterkörper (4) bilden. An den radial außenliegenden Endabschnitten des Förderblatts können Führungselemente angeordnet sein über welche im Sammelraum (28) nicht aufgefangene Luftblasen zum in Drehrichtung benachbarten Sammelraum (28') leitbar sind.

## Beschreibung

Die Erfindung betrifft einen Filter für Teichanlagen oder dgl. gemäß dem Oberbegriff des Patentanspruchs 1.

Derartige Filter werden beispielsweise zum Reinigen/Klären von Teichwasser bei größeren Teichanlagen eingesetzt. Diese Reinigung ist besonders bei Koi-Teichanlagen wichtig, da die Haltung dieser Tiere es erfordert, die Teichwasserqualität innerhalb relativ enger Grenzen konstant zu halten.

Üblicherweise werden zum Ausfiltern von größeren Feststoffen, wie beispielsweise Blättern, Ästen, etc. Trommelfilter verwendet, wie sie beispielsweise in der jüngeren Anmeldung DE 10 2006 005 368.0 beschrieben sind. Das Ausfiltern von feinen Schmutz- und Schwebstoffen sowie die biologische Umsetzung organischer Schadstoffe erfolgt im Wesentlichen in nachgeschalteten Filtern, die beispielsweise als sogenannte Kaldnes^{®}-Filter oder sogenannte "Bubble Bead Filter (www.bubblebeadfilters.co.uk)" ausgebildet sind. Bei derartigen Filtern ist ein Schwimmbett aus Filterkörpern vorgesehen, auf denen sich Mikroorganismen zur biologischen Filtration absetzen. Dabei entsteht auf der Filteroberfläche ein Biofilm bestehend aus einer Vielzahl von Bakterienkulturen, über die das organische Material abgebaut und dabei als Abbauprodukt Kohlendioxid und Wasser entsteht. Des Weiteren werden durch die Bakterien Stickstoffverbindungen zu harmlosen Nitrat umgewandelt.

Bei den sogenannten Kaldnes^{®}-Filtern werden relativ komplex aufgebaute Filterkörper mit großer spezifischer Oberfläche verwendet, so dass für den biologischen Abbau eine große Besiedlungsfläche zur Verfügung gestellt wird. Für die vorgeschriebene biologische Umsetzung ist es wichtig, dass genügend Sauerstoff zur Verfügung gestellt wird. Dies erfolgt im Wesentlichen dadurch, dass unterhalb der Schwimmschicht eine Belüftung vorgesehen ist, über die Luft oder Sauerstoff zugeführt wird. Diese Belüftung sorgt dafür, dass hinreichend Sauerstoff für die biologische Umsetzung zur Verfügung steht, des Weiteren wird das Schwimmbett bewegt, so dass die Bildung von Totzonen vermieden wird. Alternativ kann die Bewegung der Filterkörper auch über einen Wasserstrahl erfolgen. Durch die Bewegung des Schwimmbett fallen die daran angelagerten Schmutz- und Schwebstoffe ab und können vom Boden des Filterbehälters abgezogen werden.

Aufgrund der erforderlichen intensiven Bewegung, muss vergleichsweise viel Energie zum Bewegen des Schwimmbetts zugeführt werden.

Demgegenüber liegt der Erfindung die Aufgabe zugrunde, einen Filter für Teichanlagen oder dgl. zu schaffen, der mit vergleichsweise geringem Energieaufwand betrieben werden kann.

Diese Aufgabe wird durch einen Filter mit den Merkmalen des Patentanspruch 1 gelöst.

Erfindungsgemäß ist der Filter mit einem Schwimmbett aus einer Vielzahl von Filterkörpern ausgeführt. Diese Filterkörper werden durch eine Art Förderrad bewegt, das jedoch - in Abkehr von herkömmlichen Lösungen - nicht durch einen Motor angetrieben wird sondern durch einen in das Abwasser eingeleiteten Luftstrom, der das Förderrad so beaufschlagt, dass ein Drehmoment auf dieses übertragen wird. Dieser zugeführter Luftstrom erfüllt somit zwei Aufgaben: zum Einen wird der zum Abbau von Nitrit und Ammoniak erforderliche Sauerstoff eingetragen und zum Anderen die eingetragene Energie zum Antrieb des Förderrads verwendet. Es zeigte sich, dass sich ein derartiger Filter mit einem Bruchteil derjenigen Energie betreiben lässt, die bei herkömmlichen Filtern erforderlich ist.

Erfindungsgemäß ist das Förderrad so ausgeführt, dass es Filterkörper vom Schwimmbett weg nach unten, d.h. in die zu reinigende Flüssigkeit hinein und aus dieser heraus wieder in Richtung zum Schwimmbett fördert, wobei diese geförderte Teilmenge direkt mit dem Luftstrom beaufschlagt ist, so dass eine optimale Sauerstoffzufuhr zum Biofilm auf den Filterkörpern gewährleistet ist.

Bei einem besonders einfach aufgebauten Ausführungsbeispiel erfolgt die Zuführung des Luftstroms radial versetzt zur Förderradachse, so dass auch bei einem vergleichsweise geringen Luftstrom ein hohes Drehmoment auf das Förderrad wirkt.

Die Filterwirkung ist optimal, wenn das Förderrad eine Vielzahl von Förderblättern hat, die jeweils einen Sammelraum für Luftblasen und Filterkörper bilden.

Der Wirkungsgrad des Filters lässt sich weiter erhöhen, wenn an radial aussenliegenden Endabschnitten jedes Sammelraums ein Führungselement angeordnet ist, über das im Sammelraum nicht aufgefangene Luftblasen zum in Drehrichtung benachbarten Sammelraum leitbar sind.

Dieses Führungselement kann beispielsweise eine Leitplatte sein, die radial über den zugeordneten Sammelraum hinaussteht und sich bis in den benachbarten Sammelraum hinein erstreckt.

Bei bevorzugten Ausführungsbeispielen der Erfindung sind vier am Umfang gleichmäßig verteilte Förderblätter vorgesehen. Selbstverständlich können auch andere Teilungen ausgeführt werden.

Bei einem besonders preiswert herstellbaren Ausführungsbeispiel erstrecken sich die Förderblätter etwa in Radialrichtung und haben an ihrem Endabschnitt etwa in Tangentialrichtung laufende Randwandungen, durch die der Sammelraum begrenzt ist.

Bei einer alternativen Lösung sind die Förderblätter etwa turbinenschaufelförmig gekrümmt ausgeführt, wobei die radial aussen liegenden Bereiche ebenfalls tangential verlaufen.

Der Energieaufwand zum Betreiben des Filters lässt sich weiter verringern, wenn der Luftstrom im Intervall zugeführt ist.

Die Filterwirkung ist optimal, wenn dem vorgeschriebenen Schwimmbett ein Grobfilter zum Ausfiltern von größeren Feststoffen vorgeschaltet ist.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 eine Schemadarstellung eines ersten Ausführungsbeispiels eines erfindungsgemäßen Filters mit pneumatischem Antrieb;
Figur 2 ein weiteres Ausführungsbeispiel mit Führungselementen und
Figur 3 ein Ausführungsbeispiel eines Filters mit etwa turbinenförmigen Förderrad.

Der anhand der folgenden Figuren beschriebene Filter 1 wird insbesondere bei Koi-Teichanlagen eingesetzt und dient zur Ausfilterung von feinen Schwebeteilchen und zur biologischen Umsetzung von unerwünschten organischen Bestandteilen des Wassers, insbesondere von Ammonium und Nitrit. Diesem mechanischen und biologischen Filter 1 ist in der Regel ein weiterer Filter vorgeschaltet, über den grobere Feststoffe aus dem Wasser ausgefiltert werden.

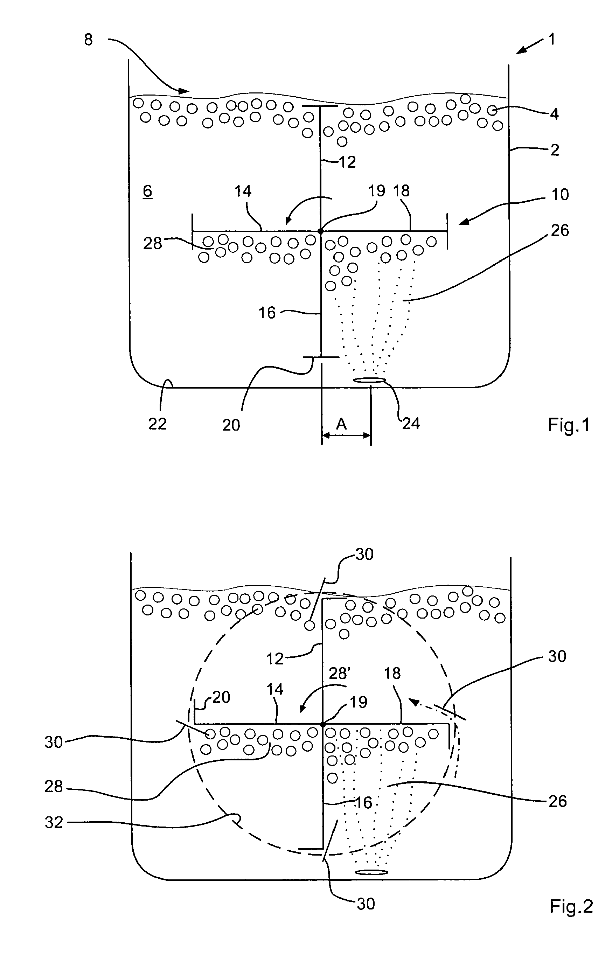

Der Filter 1 hat einen Filterbehälter 2, in den das zu reinigende Wasser über einen Einlass zugeführt und über einen Auslass abgezogen wird (Einlass und Auslass sind in den Figuren 1 bis 3 nicht dargestellt). Die Geometrie des Filterbehälters 2 kann nahezu beliebig gewählt werden, er kann in offener oder geschlossener Bauweise ausgeführt sein.

Als Filtermittel werden bei dem erfindungsgemäßen Filter 1 eine Vielzahl von Filterkörpern 4 verwendet, die im zu reinigenden Wasser 6 aufschwimmen und somit eine Schwimmdecke ausbilden. Der Auslauf des Filterbehälters 2 ist so angeordnet, dass das Wasser 6 im Bereich des Flüssigkeitspiegels 8 abgezogen wird und somit durch diese Schwimmdecke von unten nach oben hindurch fließen muß. Durch diese Vielzahl von Filterkörpern 4 werden feine Schwebteilchen zurück gehalten und somit ausgefiltert. Die vorzugsweise aus Kunststoff bestehende Filterkörper 4 sind mit einer sehr großen Oberfläche ausgeführt, die durch eine besondere, beispielsweise wendelförmige Formgebung erreicht wird. Mit derartigen Filterkörpern 4 wird beispielsweise eine Oberfläche von etwa 700 m²/m³ Filterkörper zur Verfügung gestellt. An dieser sehr großen Filterkörperoberfläche siedeln sich Bakterienstämme unterschiedlichster Art an, die für die eingangs beschriebene biologische Umsetzung sorgen.

Erfindungsgemäß ist im Filterbehälter 2 ein Förderrad 10 drehbar gelagert. Dieses ist beim dargestellten Ausführungsbeispiel mit vier Förderblättern 12, 14 , 16, 18 ausgeführt, wobei eine Drehachse 19 derart innerhalb des Filterbehälters 2 angeordnet ist, dass die radial aussenliegenden Endabschnitte der Förderblätter 12, 14, 16, 18 jeweils den Flüssigkeitsspiegel überstreichen. Bei dem in Figur 1 dargestellten Ausführungsbeispiel sind an diesen radial aussenliegenden Endabschnitten der Förderblätter 12, 14, 16, 18 tangential zum Umfangskreis verlaufende Randwandungen 20 ausgebildet, die etwa senkrecht zu dem jeweiligen Förderblatt 12, 14, 16, 18 und beidseitig darüber hinausstehend verlaufen, so dass sich eine T-förmige Struktur (in der Seitenansicht gemäß Figur 1 gesehen) ergibt.

Im Bereich eines Bodens 22 des Filterbehälters 2 ist eine Luftaustrittsdüse 24 ausgebildet, durch die hindurch ein Luftstrom 26 in den Filterbehälter 2 eingeleitet werden kann. In der Seitenansicht gemäß Figur 1 ist die Luftaustrittsdüse 24 um das Maß A zur Achse 19 versetzt angeordnet, so dass der Luftstrom 26 entsprechend versetzt auf das jeweils darüber liegende Förderblatt - in Figur 1 auf das Förderblatt 18 - auftrifft. Der im Wasser 6 aufsteigende Luftstrom 26 übt somit ein Drehmoment auf das Förderrad 10 aus, so dass sich dieses um die Drehachse 19 in Pfeilrichtung dreht. Die Rotationsgeschwindigkeit des Förderrads 10 hängt dabei vom eingeleiteten Volumenstrom ab und kann somit auf sehr einfache Weise eingestellt werden.

Durch diese Rotation des Förderrads 10 werden Filterkörper 4 aus der Schwimmdecke heraus nach unten gefördert, wobei sich in einem vom Überstand der Randwandung 20 begrenzten Sammelraum 28 eine Vielzahl von Filterkörpern 4 aufstauen und nach unten mitgenommen werden. Diese Filterkörper 4 folgen der Drehung des Förderrads 10 und gelangen nach Durchlaufen des unteren Totpunkts in Kontakt mit dem Luftstrom 26. Durch diesen werden dann zum Einen an der Oberfläche des jeweiligen Filterkörpers 4 abgesetzte Schwebteilchen abgespült und zum Anderen wird der Biofilm an der Filterkörperoberfläche mit Sauerstoff versorgt, so dass die vorbeschriebene Umsetzung von Ammonium und Nitrit in Nitrat umgesetzt und sonstige unerwünschte organische Bestandteile abgebaut. Der Luftstrom 26 ist dabei so eingestellt, dass hinreichend Sauerstoff für die biologische Umsetzung geliefert wird - da jedoch vergleichsweise wenig Luft eingeblasen werden muss, um das Förderrad 10 rotieren zu lassen, kann eine übermäßige Beaufschlagung mit Sauerstoff und somit eine übermäßige Kohlendioxidentwicklung im Filter 1 zuverlässig verhindert werden. Bei einer derartigen übermäßigen Kohlendioxidentwicklung wird die Karbonathärte des Wassers verringert und der ph-Wert kann instabil werden, so dass der Fischbestand gefährdet ist. Diese Gefahr ist bei herkömmlichen Filtern gegeben.

Die Effektivität der Umsetzung lässt sich weiter verbessern, wenn der Luftstrom 26 intervallförmig zugeführt wird, so dass der Energieverbrauch der Anlage minimal ist. Es zeigte sich im praktischen Betrieb, dass der Filter 1 nur ein Bruchteil der Energie herkömmlicher Filter erfordert, bei denen die Filterkörper 4 beispielweise ausschließlich durch einen Luftvolumenstrom umgewälzt sind.

Mit dem erfindungsgemäßen pneumatischen Antrieb lassen sich auch sehr große Filteranlagen betreiben, wobei durch den einfachen Aufbau sichergestellt ist, dass sich keinerlei Toträume im Filterbehälter 2 ausbilden, in deren Bereich die Filterwirkung und biologische Umsetzung praktisch nicht statt findet.

In Figur 2 ist ein Ausführungsbeispiel dargestellt, bei dem die Randwandungen 20 die Förderblätter 12, 14, 16, 18 lediglich einseitig überstehen. Bei diesem Ausführungsbeispiel ist der Überstand an der in Drehrichtung gesehen hinten liegenden Seite jedes Förderblatts 12, 14, 16, 18 ausgebildet. An der anderen in Drehrichtung vorne liegenden Seite der Förderblätter 12, 14, 16, 18 sind jeweils schräg angestellte Leitplatten 30 angeordnet, die eine Doppelfunktion übernehmen: zum Einen begrenzen diese Leitplatten 30 während eines Teils der Förderraddrehung den Sammelraum 28 (siehe links in Figur 2) und zum Anderen sorgen die Leitplatten 30 dafür, dass am Aussenumfang des Förderrads 10 vorbei streichende Luftblasen in Richtung zu dem darüber liegenden Sammelraum geleitet werden. Hierzu stehen die Leitplatten 30 etwas über den gestrichelt angedeuteten Aussenumfang des Förderrads 10 hinaus und sind schräg zur Radialrichtung angestellt, wobei sie in den benachbarten Sammelraum 28' geleitet werden, so dass die Filterwirkung des Filters 1 weiter verbessert wird. Dieser Teilstrom ist in Figur 2 mit einem strichpunktierten Pfeil angedeutet.

Bei dem erfindungsgemäßen Filter 1 wird es bevorzugt, wenn das Förderrad 10 stirnseitig (parallel zur Zeichenebene in Figur 2) verschlossen ist, hierzu sind an den Stirnseiten des Förderrads 10 Stirnplatten 32 ausgebildet, wie sie in Figur 2 gestrichelt dargestellt sind. Diese Stirnplatten 32 sind mit geringem Abstand zur benachbarten Behälterwandung ausgeführt, so dass in diesem Bereich keine Toträume entstehen können.

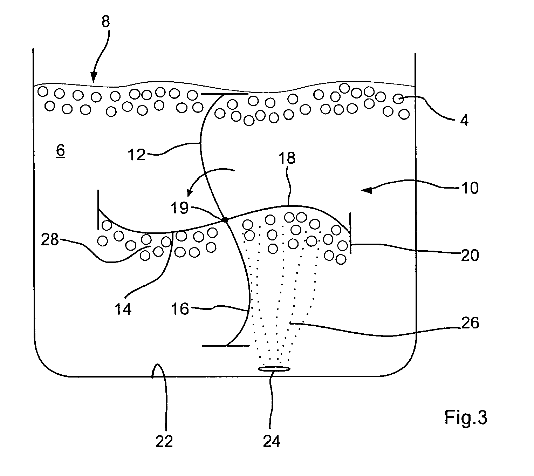

Die Geometrie des Förderrads 10 ist so gewählt, dass hinreichend viele Filterkörper 4 während der Rotation in den jeweiligen Sammelräumen 28 zurückgehalten werden können und des Weiteren der Luftstrom 26 möglichst effektiv zur Drehung des Förderrads 10 ausgenutzt werden kann. Selbstverständlich können auch mehr oder weniger Förderblätter als bei den beschriebenen Ausführungsbeispielen vorgesehen werden. So ist es beispielsweise möglich, wie in Figur 3 dargestellt, das Förderrad 10 in der Seitenansicht etwa turbinenschaufelförmig auszuführen, wobei jedes Förderblatt 12, 14, 16, 18 in der Seitenansicht gekrümmt ist, wobei die Krümmung so gewählt ist, dass sie in dem vom Luftstrom 26 beaufschlagten Bereich nach oben, d.h. mit Bezug zum Luftstrom 20 konkav gekrümmt ist, um eine möglichst große Angriffsfläche zu bieten. Die radial aussenliegenden Endabschnitte laufen wieder in sich etwa in Tangentialrichtung erstreckenden Randwandungen 20 aus, wobei selbstverständlich ebenfalls wieder Leitplatten 30 vorgesehen sein können, über die seitlich vorbei strömende Luftblasen hin zum benachbarten Sammelraum 28 - geführt werden. Wie bei dem zuvor beschriebenen Ausführungsbeispiel überstreichen die Randwandungen 20 während der von Luftstrom 26 verursachten Drehung den Flüssigkeitsspiegel 8, so dass eine Teilmenge der Filterkörper 4 aus der Schwimmdecke heraus nach unten hin zum Luftstrom 26 gefördert werden.

Zum Abführen des ausfiltrierten Schwebstoffe und der organischen Umsetzungsprodukte kann ein nicht dargestellter Auslass des Filterbehälters (2) geöffnet werden, so dass diese Feststoffe nach unten ausgespült oder durch Schwerkraftwirkung abfließen können. Dabei ist es bevorzugt, wenn der Boden (22) zu diesem Auslass hin abfällt, so dass ein vollständiger Austrag des Filtrats ermöglicht ist.

Offenbart ist ein Filter für Teichanlagen oder dergleichen, mit einem Schwimmbett aus einer Vielzahl von Filterkörpern, die eine Besiedlungsfläche von Mikroorganismen zur Verfügung stellen. Erfindungsgemäß ist der Filter mit einem Förderrad ausgeführt, das von einem ins zu reinigende Wasser eingeleiteten Luftstrom drehbar ist.

### Bezugszeichenliste

- 1: Filter
- 2: Filterbehälter
- 4: Filterkörper
- 6: Wasser
- 8: Flüssigkeitsspiegel
- 10: Förderrad
- 12: Förderblatt
- 14: Förderblatt
- 16: Förderblatt
- 18: Förderblatt
- 19: Drehachse
- 20: Randwandung
- 22: Boden
- 24: Luftaustrittsdüse
- 26: Luftstrom
- 28: Sammelraum
- 30: Leitplatte
- 32: Stirnplatten

## Patentansprüche

1. Filter für Teichanlagen oder dergleichen, mit einer Vielzahl von in dem zu reinigenden Wasser als eine Art Schwimmdecke verteilten, jeweils eine Besiedlungsfläche für Mikroorganismen bereitstellenden Filterkörpern (4), die mittels einer Einrichtung bewegbar sind, **dadurch gekennzeichnet, dass** die Einrichtung ein Förderrad (10) mit zumindest einem Förderblatt (12, 14, 16, 18) ist, wobei das Förderrad (10) durch einen in das Wasser eingeleiteten Luftstrom (26) antreibbar ist.

2. Filter nach Anspruch 1, wobei das Förderblatt (12, 14, 16,18) so gestaltet ist, dass es Filterkörper (4) vom Schwimmbett weg nach unten und wieder zurück zum Schwimmbett bewegt.

3. Filter nach Anspruch 1 oder 2, wobei der Luftstrom (26) radial versetzt zu einer Achse (19) des Förderrads (10) auf das Förderblatt (12, 14, 16,18) auftrifft, so dass ein Drehmoment auf das Förderrad (10) wirkt.

4. Filter nach Anspruch 3, wobei das Förderrad (10) eine Vielzahl von Förderblättern (12, 14, 16, 18) hat, die jeweils einen Sammelraum (28) für Luftblasen und Filterkörper (4) bilden.

5. Filter nach Anspruch 4, wobei an radial aussenliegenden Endabschnitten jedes Förderblatts (12, 14, 16,18) ein Führungselement angeordnet ist, über das im Sammelraum (28) nicht aufgefangene Luftblasen zum in Drehrichtung benachbarten Sammelraum (28') leitbar sind.

6. Filter nach Anspruch 5, wobei das Führungselement eine Leitplatte (30) ist, die radial über den zugeordneten Sammelraum (28) hinaus steht und sich bis in den benachbarten Sammelraum (28') hinein erstreckt.

7. Filter nach Anspruch 4, wobei vier am Umfang gleichmäßig verteilte Förderblätter (12, 14, 16, 18) vorgesehen sind.

8. Filter nach einem der vorhergehenden Patentansprüche, wobei die Förderblätter (12, 14, 16, 18) etwa in Radialrichtung verlaufen und an ihren Endabschnitten etwa tangential zum Umfangskreis angeordnete Randwandungen (20) haben.

9. Filter nach einem der Ansprüche 1 bis 7, wobei die Förderblätter (12, 14, 16, 18) gekrümmt ausgeführt sind, wobei die Randbereiche vorzugsweise etwa tangential auslaufen.

10. Filter nach einem der vorhergehenden Patentansprüche, wobei der Luftstrom (26) im Intervall zugeführt ist.

11. Filter nach einem der vorhergehenden Patentansprüche, mit einem vorgeschalteten Grobfilter.
